Europäisches Patentamt

European Patent Office

Office européen des brevets

(11) Veröffentlichungsnummer: **0 420 006 A1**

# (12) EUROPÄISCHE PATENTANMELDUNG

(21) Anmeldenummer: **90117922.6**

(22) Anmeldetag: **18.09.90**

(51) Int. Cl.⁵: **C08C 19/08**

(30) Priorität: **29.09.89 DE 3932533**

(43) Veröffentlichungstag der Anmeldung:
**03.04.91 Patentblatt 91/14**

(84) Benannte Vertragsstaaten:
**DE FR GB**

(71) Anmelder: **BAYER AG**

**W-5090 Leverkusen 1 Bayerwerk(DE)**

(72) Erfinder: **Greve, Heinz-Hermann, Dr.**
**Heidemannstrasse 76**
**W-5000 Köln 30(DE)**
Erfinder: **Meurer, Kurt Peter, Dr.**
**Am Krahfeld 1**
**W-5330 Königswinter 21(DE)**
Erfinder: **Obrecht, Werner, Dr.**
**Holderbergerstrasse 108**
**W-4130 Moers 2(DE)**
Erfinder: **Musch, Rüdiger, Dr.**
**Altenberger-Dom-Strasse 169**
**W-5060 Bergisch Gladbach 2(DE)**

(54) Verfahren zur Herstellung von Polychloropren mässiger Viskosität.

(57) Durch thermooxidativen Abbau von Polychloropren unter Scherung lassen sich Produkte mit niedriger Viskosität und überraschend niedrigem Gelgehalt erhalten.

EP 0 420 006 A1

## VERFAHREN ZUR HERSTELLUNG VON POLYCHLOROPREN MÄSSIGER VISKOSITÄT

Die Erfindung betrifft ein Verfahren zur Herstellung von Polychloropren (CR) mäßiger Viskosität und infolgedessen guter Verarbeitbarkeit durch thermooxidativen Abbau von CR höherer Viskosität.

CR-Vulkanisate gelten wegen ihrer ausgewogenen Eigenschaften, insbesondere wegen ihrer Temperatur-, Ozon-und Ölbestandigkeit, als hervorragende Gummis, die vielen anderen Materialien überlegen sind. Sie werden in großem Umfang in der Klebstoff-, in der Kabel- und in der Automobilindustrie eingesetzt. CR wird als Festkautschuk mit Mooney-Viskositäten von ca. 35 bis ca. 120 (ML 1 + 4) 100° C angeboten.

Für manche Zwecke werden niederviskose CR-Typen als Festkautschuke verlangt. Sie können unter Verwendung hoher Reglermengen durch Massepolymerisation (JP-A 72/8608), durch Emulsionspolymerisation mit anschließender Aufarbeitung (GB-PS 905 971, 963 075) oder durch Lösungspolymerisation mit nachfolgendem Abziehen des Lösungsmittels (DE-OS 2 423 714, 2 444 565) hergestellt werden. Durch den hohen Gehalt der aus den Reglern stammenden, chemisch eingebauten Fragmente besitzen diese niederviskosen CR-Typen bei der Vulkanisation eine Aktivität, die nicht alle Wünsche erfüllt.

Die Mastizierung synthetischer Kautschuke verläuft bekanntlich nicht so leicht wie die des Naturkautschuks, insbesondere dann, wenn die Kautschuke Elektronen ziehende Substituenten (wie CN, Cl) besitzen; vgl. H. Fries und R.R. Pandit, Rubber Chem. Technol 55 , 309 f. Während Versuche zum CR-Abbau in Dekalinlösung bei 150° C innerhalb einiger Stunden zu einem CR mit 1/20 des ursprünglichen Molekulargewichts geführt haben, wird berichtet, daß beim Versuch eines thermooxidativen CR-Abbaus ein Gel entsteht; vgl. K. Itoyama, 122nd Meeting of the Rubber Division of the Amer. Chem. Soc., Chicago/III., 04.-07.10.1982.

Es wurde nun ein Verfahren gefunden, wonach durch thermooxidativen CR-Abbau ein niederviskoses CR mit geringem Gelgehalt erhalten wird.

Gegenstand der Erfindung ist ein Verfahren zur Herstellung von Polychloropren einer Mooney-Viskosität von 5 bis 30, vorzugsweise 10 bis 25, (ML1 + 4) 100° C durch thermooxidativen Abbau eines Polychloroprens einer Mooney-Viskosität von 35 bis 120, vorzugsweise 45 bis 100, (ML 1 + 4) 100° C bei einer Massetemepratur von 40° C bis 200° C, vorzugsweise 70° C bis 185° C durch Scheren mit einer Scherrate von 30 bis 5.000, vorzugsweise von 50 bis 1.000 sec⁻¹, bis die gewünschte Mooney-Viskosität erreicht ist.

Für das erfindungsgemäße Verfahren als Ausgangsprodukte einzusetzende Polychloroprene sind Chloroprenpolymerisate, die neben polymerisierten 2-Chlropreneinheiten 0,05 bis 30, vorzugsweise 0,1 bis 20 Gew-%, bezogen auf Chloroprenpolymerisat, copolymerisierte Einheiten anderer ethylenisch ungesättigter Monomerer oder Schwefel enthalten können, also Polychloroprene, wie sie beispielsweise in "Methoden der Organischen Chemie" (Houben-Weyl) Bd. E20/2, 842-859, Georg Thieme Verlag, Stuttgart - New York 1987, beschrieben sind.

Bevorzugte, mit Chloropren copolymerisierbare, ethylenisch ungesättigte "andere Monomere" sind im wesentlichen 2,3-Dichlorbutadien und 1-Chlorbutadien. Schwefelmodifizierte Polychloroprene sind bevorzugt.

Die Menge an elementarem Schwefel, die für die Herstellung schwefelmodifizierten Polychloroprens verwendet wird, beträgt 0,05 bis 1,5, vorzugsweise 0,1 bis 1, Gew.-%, bezogen auf eingesetzte Monomere. Bei der Verwendung von Schwefelspendern ist deren Menge so zu bemessen, daß der freiwerdende Schwefel den oben angegebenen Mengen entspricht.

Die Mooney-Viskosität wird nach DIN 53 523 bestimmt.

Geeignete Aggregate zur Durchführung des erfindungsgemäßen Verfahrens umfassen vorzugsweise beheizbare Ein-und Mehrwellenschnecken, insbesondere Zweiwellenschnecken mit Längen/Durchmesser-Verhältnissen von 10 bis 100, Be- und Entgasungsöffnungen und gegebenenfalls weiteren Einfüllöffnungen für Mastizierhilfsmittel. Die für die nachfolgenden Beispiele verwendete Schnecke war eine Zweiwellenschnecke mit gegenläufigen Schnecken mit einer Lange von 120 cm, einem Zylinderdurchmesser von 3 cm und folgendem Aufbau:
Eingangszone 1 (Länge 10 cm) mit Einfülloffnung,
Aufheizzone 2 (Länge 10 cm),
Dosierzone 3 (Länge 10 cm) mit Begasungsöffnung,
Reaktionszone 4 (Länge 60 cm) mit Einfüllöffnungen in der Mitte und am Ende der Zone,
Entgasungszone 5 (Länge 20 cm) mit Entgasungsöffnung,
Extrusionszone 6 (Länge 10 cm) mit Extrusionskopf.

Der thermooxydative Abbau verlangt die Gegenwart eines Mittels, das die durch die aufgebrachte mechanische Energie entstandenen Bruchstücke mit terminalen freien Radikalen zu stabilisieren vermögen. Derartige Mittel umfassen Sauerstoff selbst, freien Sauerstoff enthaltende Gasgemische wie z.B. Luft, und Sauerstoffspender, die chemisch gebundenen Sauerstoff unter Reaktionsbedingungen abgeben, wie z.B. Peroxide, Nitrate und Chlorate. Aus Kostengründen ist Luft das bevorzugte Mittel.

Das erfindungsgemäße Verfahren wird vorzugsweise unter Verwendung von Radikalübertragungsmitteln durchgeführt, wobei Mittel mit Radikalübertragungskonstanten von

$50 \cdot 10^4$ bis $20.000 \cdot 10^4$, vorzugsweise
$80 \cdot 10^4$ bis $180 \cdot 10^4$, insbesondere
$110 \cdot 10^4$ bis $150 \cdot 10^4$

besonders wirksam sind. Die angegebenen Werte beziehen sich auf eine Ethylenpolymerisation bei 130°C, wie sie im Polymer Handbook, Hrsg.: J. Brandrup, E.H. Immergut, 2. Aufl., Wiley, New York 1975, aufgeführt sind. Solche Kettenübertragungsmittel umfassen Mercaptane wie die isomeren Xylylmercaptane, Thiophenole und ihre Zinksalze wie Pentachlorthiophenol, Zinkpentachlorthiophenol, β-Thionaphthol, und Zink-o-benzamido-thiophenol, aromatische Disulfide wie o.o'-Dibenzamidodiphenyldisulfid; Salze gesättigter Fettsäuren, Benzol, Toluol, Aceton, Tetrachlormethan, Iodoform und Cumol.

Die notwendigen Mengen hingen hauptsächlich vom gewünschten Grad des Abbaus ab und lassen sich durch einige wenige Vorversuche zuverlässig bestimmen.

Bei schwefelmodifizierten Polychloroprenen kann der gewünschte Abbau durch Verwendung üblicher Peptisationsmittel, wie sie beispielsweise in den DE-OS 1 911 439, 2 018 736, 2 755 074 und 3 246 748, in der DE-PS 2 645 920, in den EP-A 21 212 und 200 857, in der FR-PS 1 457 004 und in den US-PS 2 264 713, 3 378 538, 3 397 173 und 3 507 825 beschrieben sind, beschleunigt werden.

Die erfindungsgemäß hergestellten niederviskosen Polychloroprene lassen sich aufgrund ihrer funktionellen Gruppen, die durch die Abbaureaktion entstehen, alleine mit Metalloxiden als Vulkanisiermittel, wie Magnesiumoxid und/oder Zinkoxid vulkanisieren. Die Mengen der verwendeten Vulkanisiermittel beträgt in der Regel 2 bis 10 Gew.-%, bezogen auf Polychloropren.

Die Vulkanisation kann bei Temperaturen von 100 bis 200°C, vorzugsweise 130 bis 180°C, gegebenenfalls unter einem Druck von 10 bis 200 bar, erfolgen.

Die hervorragenden Vulkanisateigenschaften werden in der Regel schon ohne Temperung erreicht, lassen sich aber durch Tempern oft noch verbessern.

Die erfindungsgemäß hergestellten Polychloroprene lassen sich mit Vorteil zur Herstellung von Treibriemen, Luftfedern, Transportbändern und anderen technischen Gummiartikeln verwenden.

Die in den folgenden Beispielen genannten Teile sind Gewichtsteile.

Beispiele

Allgemeine Verfahrensbeschreibung:

Die Umdrehungszahl der Schnecke variiert zwischen 40 bis 60 min$^{-1}$, wobei zwischen 1,5 bis 2,5 kg/h Produkt durchgesetzt werden. In der Aufheizzone (2) wird das Produkt erhitzt und in Zone (3) mit 200 bis 700 Normliter Luft unter Druck (2 bis 40 bar) vermischt. Danach wird das Produkt bei definierter Massetemperatur durch die Reaktionszone (4) gefördert. Bei den erfindungsgemäßen Verfahren kann das Polymer entweder in der Mitte oder am Ende der Reaktionszone (4) mit weiteren Hilfsmitteln versetzt werden (s. einzelne Beispiele).

In der Entgasungszone (5) werden bei einem Druck von 10 bis 500 mbar nicht umgesetzte Luft und nicht umgesetzte flüchtige Hilfsmittel aus dem Produkt entfernt. Danach wird das Produkt über einen Extrusionskopf aus der Zweiwellenschnecke ausgefahren.

Der Gelgehalt der Polymeren wird mittels Ultrazentrifuge bestimmte (5%ige Konzentration in Tetrahydrofuran, 60 Minuten Zentrifugieren bei 20.000 Upm).

Beispiel 1

Ein Mercaptan-geregeltes Polychloropren mit einer Mooney-Viskosität von 40 (ML 1 + 4) 100°C wird zu einem Polychloropren mit einer Mooney-Viskosität von 18 (ML 1 + 4) 100°C abgebaut.

Hierzu werden bei einer Umdrehungszahl der Wellen von 40 min$^{-1}$ 2,3 kg/h Polychloropren durch die Zweiwellenschnecke gefördert. In der Aufheizzone (2) wird das Produkt auf 60°C aufgeheizt. In Zone (3) wird Luft eindosiert (1.500 l/h) und das Produkt bei 80°C in die Reaktionszone (4) weitergefördert. In der Reaktionszone (4) wird Toluol in einer Menge von 800 ml/h eindosiert. Toluol und nicht umgesetzte Luft werden in der Entgasungszone (5) bei einem Druck von 40 bis 50 mbar entfernt, wobei das Polychloropren auf 140°C aufgeheizt wird. Nach dem Austrag aus der Zweiwellenschnecke war das Produkt in Tetrahydrofuran löslich; der Gelgehalt lag unter 2 Gew.-%.

Beispiel 2 (Vergleich)

Das als Ausgangsprodukt für Beispiel 1 eingesetzte Polychloropren mit einer Mooney-Viskosität von 40 (ML 1 + 4) 100°C wird in einem Umlufttrokkenschrank einer Heißluftalterung bei 70°C unterworfen. Dabei stieg die Mooney-Viskosität an und betrug nach 3 Tagen 41, nach 5 Tagen 43 und nach 7 Tagen 45 (ML 1 + 4) 100˚C. Der Gelgehalt nach 7 Tagen betrug 3,2 Gew.-%.

Beispiel 3

Beispiel 1 wird mit dem Unterschied wiederholt, daß am finde von Reaktionszone (4) pro Stunde 200 ml einer Lösung von 20 g 2,2-Diphenyl-1-pikrylhydrazyl in 200 ml Toluol zugegeben werden. Das Endprodukt besaß eine Mooney-Viskosität von 19 (ML 1 + 4) 100˚C und einen Gelgehalt von unter 2 Gew.-%.

Beispiel 4

Ein Schwefel-modifiziertes Polychloropren mit einem Schwefelgehalt von 0,5 Gew.-% und einer Mooney-Viskosität von 48 (ML 1 + 4) 100˚C wird zu einem Polychloropren mit einer Mooney-Viskosität von 19 (ML 1 + 4) 100˚C abgebaut.

Hierzu werden bei einer Umdrehungszahl der Wellen von 60 min⁻¹ 2,45 kg/h Polychloropren durch die Zweiwellenschnecke gefördert. In der Aufheizzone (2) wird das Produkt auf 60˚C aufgeheizt. In Zone (3) wird Luft eindosiert (1.650 l/h) und das Produkt bei 130˚C in die Reaktionszone (4) weitergefördert. In der Reaktionszone (4) wird Toluol in einer Menge von 900 ml/h eindosiert Toluol und nicht umgesetzte Luft werden in der Entgasungszone (5) bei einem Druck von 10 bis 50 mbar entfernt, wobei das Polychloropren auf 140˚C aufgeheizt wird. Nach dem Austrag aus der Zweiwellenschnecke war das Produkt in Tetrahydrofuran löslich; der Gelgehalt lag unter 2 Gew.-%.

Beispiel 5 (Vergleich)

Das als Ausgangsprodukt für Beispiel 4 eingesetzte Polychloropren mit einer Mooney-Viskosität von 48 wird in einem Umlufttrockenschrank einer Heißluftalterung bei 90˚C unterworfen. Nach 14 Stunden beträgt die Mooney-Viskosität 26 (ML 1 + 4) 100˚C, durchschreitet nach 16 Stunden bei 24 (ML 1 + 4) 100˚C ein Minimum und liegt nach 18 Stunden bei 27 und nach 36 Stunden bei 65 (ML 1 + 4) 100˚C. Dar anfangs beobachtete Viskositätsabfall ist vermutlich auf eine Nachpeptisation zurückzuführen; die durch diesen Abbau erreichbare Viskosität liegt immer höher als die durch thermooxidativen Abbau erreichbare Viskosität.

Beispiel 6

Beispiel 4 wird mit dem Unterschied wiederholt, daß am Ende von Reaktionszone (4) pro Stunde 180 ml einer Lösung von 20 g Tetraethylthiuramdisulfid in 200 ml Toluol zugegeben werden. Das Endprodukt war in Tetrahydrofuran löslich, besaß eine Mooney-Viskosität von 16 (ML 1 + 4) 100˚C und einen Gelgehalt von unter 2 Gew.-%.

Beispiel 7

Ein Xanthogendisulfid-geregeltes Polychloropren mit einer Mooney-Viskosität von 58 (ML 1 + 4) 100˚C wird zu einem Polychloropren mit einer Mooney-Viskosität von 17 (ML 1 + 4) 100˚C abgebaut.

Hierzu werden bei einer Umdrehungszahl der Wellen von 45 min⁻¹ 2,2 kg/h Polychloropren durch die Zweiwellenschnecke gefördert. In der Aufheizzone (2) wird das Produkt auf 60˚C erhitzt. In Zone (3) wird Luft eindosiert (1.600 l/h) und das Produkt bei 170˚C in die Reaktionszone (4) weitergefördert. In der Reaktionszone (4) wird Toluol in einer Menge von 1.000 ml/h eindosiert. Toluol und nicht umgesetzte Luft werden in der Entgasungszone (5) bei einem Druck von 40 bis 50 mbar entfernt, wobei das Polychloropren auf 170˚C aufgeheizt wird. Nach dem Austrag aus der Zweiwellenschnecke war das Produkt in Tetrahydrofuran löslich; der Gelgehalt lag unter 2 Gew.-%.

Beispiel 8

Beispiel 7 wird mit dem Unterschied wiederholt, daß am Ende von Reaktionszone (4) pro Stunde 190 ml einer Lösung von 18 g Xanthogendisulfid in 200 ml Toluol zugegeben werden. Das Endprodukt besaß eine Mooney-Viskosität von 16 (ML 1 + 4) 100˚C und einen Gelgehalt von unter 2 Gew.-%.

**Ansprüche**

1. Verfahren zur Herstellung von Polychloropren einer Mooney-Viskosität von 5 bis 30 (ML 1 + 4) 100˚C durch thermooxidativen Abbau eines Polychloroprens einer Mooney-Viskosität von 35 bis 120 (ML 1 + 4) 100˚C bei einer Massetemperatur von 40 bis 200˚C durch Scheren mit einer Scherrate von 30 bis 5.000 sec⁻¹, bis die gewünschte Mooney-Viskosität erreicht ist.

2. Verfahren nach Anspruch 1, wonach man ein Polychloropren mit einer Mooney-Viskosität von 10 bis 25 (ML 1 + 4) 100˚C einsetzt.

3. Verfahren nach Ansprüchen 1 und 2, wonach man ein Polychloropren mit einer Mooney-Viskosität von 45 bis 100 (ML 1 + 4) 100° C abbaut.

4. Verfahren nach Ansprüchen 1 bis 3, wonach man bei einer Massetemperatur von 70 bis 185° C schert.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 111 391 (POLYSAR LTD) <br> * Claims 1-2 * <br> --- | | C 08 C 19/08 |
| A | US-A-2 338 286 (L.H. HOWLAND) <br> * Claim 1 * <br> ----- | | |

TECHNICAL FIELDS SEARCHED (Int. Cl.5)

C 08 C

The present search report has been drawn up for all claims

| Place of search | Date of completion of the search | Examiner |
|---|---|---|
| THE HAGUE | 16-01-1991 | VAN HUMBEECK F.W.C. |